# EUROPÄISCHE PATENTSCHRIFT

(11) **EP 0 563 853 B1**
(45) Veröffentlichungstag und Bekanntmachung des Hinweises auf die Patenterteilung: **04.09.1996**
(21) Anmeldenummer: 93105172.6
(22) Anmeldetag: 29.03.1993
(51) Int. Cl.: F17D 3/08

(54) **Absperr- oder Umlenkarmatur mit molchbarem Durchgang**
Closing or diversing valve with a passage adapted for a pig
Vanne de fermeture ou de déviation avec passage adapté à un passe diable

(30) Priorität: 01.04.1992 DE 4210878
(43) Veröffentlichungstag der Anmeldung: 06.10.1993
(73) Patentinhaber: ABK ARMATURENBAU GmbH, D-50997 Köln (DE)
(72) Erfinder:
(74) Vertreter: Freischem, Werner, Dipl.-Ing.

(56) Entgegenhaltungen:
- EP-A- 0 399 603
- DE-A- 3 246 622
- GB-A- 1 182 098
- US-A- 3 047 020

## Beschreibung

Die Erfindung bezieht sich auf eine Absperr- oder Umlenkarmatur, deren Gehäuse mindestens zwei Anschlüsse aufweist und deren kugelförmiges Schaltorgan in mindestens zwei Stellungen schwenkbar ist und einen molchbaren Durchgang aufweist, der in mindestens einer Schaltstellung zwei Anschlüsse miteinander verbindet.

Armaturen dieser Art sind bekannt aus einem Prospekt der Firma I.S.T. Industrie-System-Technik GmbH betreffend eine 3-Wege-Weiche. Die bekannte Absperr- und Umlenkarmatur weist ein kugelförmiges Schaltorgan auf, das einen rechtwinklig zur Drehachse verlaufenden Durchgang aufweist, der wahlweise zwei der drei Anschlüsse miteinander verbindet. Eine Armatur mit einem kugelförmigen Schaltorgan, - einem sogenannten Kugelküken - hat den Vorteil, daß auch nach längerer Benutzung und bei auftretendem Verschleiß eine dichte Anlage der Anschlüsse an das Kugelküken möglich ist. Bei dieser bekannten Armatur ist der Durchgang als 120°-Bogen ausgebildet. Das Gehäuse dieser Absperr- oder Umlenkarmatur weist drei um 120° versetzte Anschlüsse auf, und das kugelförmige Schaltorgan hat einen bogenförmigen Durchgang, dessen Mündungsebenen im Winkel von 60° zueinander stehen. Damit der Durchmesser des kugelförmigen Schaltorgans relativ klein und das Gehäuse der Armatur kompakt gehalten werden kann, ist der Durchgang im Kugelküken um einen relativ kleinen Radius gebogen. Die Mittellinie des bogenförmigen Durchganges ist um einen Radius gekrümmt, der kleiner ist als das 1,4fache des lichten Durchmessers des Durchganges. Beim Durchgang eines einteiligen, aus elastomerem Vollmaterial bestehenden DUO-Molches, der zwei ringzylindrische Dichtflächen aufweist, die im Durchmesser 1% bis 5% größer sind als der Innendurchmesser d der Rohrleitung und deren axialer Abstand voneinander 0,5 bis 0,7 mal dem Innendurchmesser d der Rohrleitung ist, liegen die zylindrischen Dichtflächen des DUO-Molches im inneren und äußeren Bogenbereich nicht dicht an der Wandung des Durchganges im Schaltorgan an. Dadurch können erhebliche Störungen im Molchsystem auftreten.

Der Erfindung liegt die Aufgabe zugrunde, eine Absperr- oder Umlenkarmatur mit kugelförmigen Schaltorganen zu schaffen, bei welcher auch ein DUO-Molch dicht an der Wandung des Durchganges im Schaltorgan anliegt, so daß diese Armatur auch als Molchfangvorrichtung ausgebildet werden kann, bei der der gefangene Molch eine angeschlossene Leitung zuverlässig abdichtet.

Diese Aufgabe wird erfindungsgemäß dadurch gelöst, daß der Krümmungsradius r des Durchganges größer ist als 1,5 mal - vorzugsweise 1,9 - dem Durchmesser des Durchganges. Der Krümmungsradius r ist zweckmäßigerweise 1,8 bis 2,5 mal so groß wie der Durchmesser d der Rohrleitung oder des Durchganges.

Weil der Molch auch im bogenförmigen Durchgang dicht an der Wandung des Durchganges anliegt, kann diese Armatur mit kugelförmigem Schaltorgan mit Vorteil als Molchstopper weiterentwickelt werden, in dem außerhalb des Durchganges an der Peripherie des Schaltorgans in einem Anschluß ein Molchstopper derart angeordnet ist, daß sich der gestoppte Molch im Durchgang des Schaltorgans befindet.

Eine dichte Anlage eines DUO-Molches im bogenförmigen Durchgang kann weiter dadurch verbessert werden, daß die rechtwinklig zur Mittellinie verlaufenden Querschnitte des bogenförmigen Durchganges etwas von einer Kreisfläche mit dem Durchmesser d abweichen, wobei der Abstand der äußersten und innersten Bogenmantellinie von der Mittellinie um 1% bis 7% kleiner ist als der halbe lichte Durchmesser d und dieser Abstand zur Mittellinie von der äußersten und innersten Bogenmantellinie zu den beiden seitlichen Bogenmantellinien kontinuierlich auf den Wert des halben lichten Durchmessers d steigt.

Vorteilhafterweise ist die erfindungsgemäße Absperr- und Umlenkarmatur auch mit einem Molchmelder versehen, der mechanisch, hydraulisch, elektrisch oder magnetisch arbeiten kann und der das Vorhandensein eines Molches meldet.

Weitere Merkmale der Erfindung ergeben sich aus den Unteransprüchen sowie aus der folgenden Beschreibung, in der Ausführungsbeispiele der Erfindung unter Bezugnahme auf die Zeichnungen näher erläutert sind. Die Zeichnungen zeigen in:
- Fig. 1: eine Schnittansicht der Absperr- oder Umlenkarmatur nach der Erfindung,
- Fig. 2: einen vergrößerten Ausschnitt aus Fig. 1,mit gestopptem Molch
- Fig. 3: eine Ansicht nach der Schnittlinie III-III in Fig. 2, ohne gestopptem Molch
- Fig. 4: eine Schnittansicht einer Drei-Wege-Armatur nach der Erfindung.

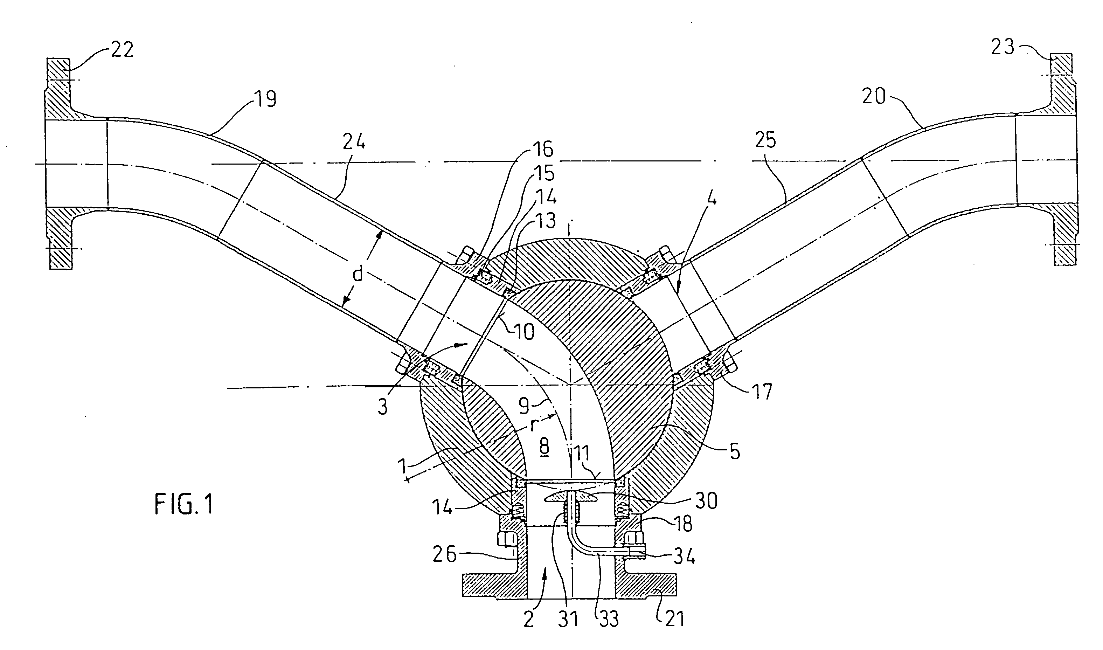

Die Absperr- und Umlenkarmatur nach Fig. 1 setzt sich zusammen aus einem Gehäuse 1, das mit drei Anschlüssen 2,3 und 4 versehen ist, und einem kugelförmigen Schaltorgan 5, das um die Zylinderachse drehbar im Gehäuse 1 gelagert ist und mit einer hier nicht dargestellten Schaltwelle in unterschiedliche Positionen gebracht werden kann, so daß, je nach Stellung des Schaltorgans 5, der Anschluß 2 über den bogenförmigen Durchgang 8 mit dem Anschluß 3 oder der Anschluß 3 mit dem Anschluß 4 oder der Anschluß 4 mit dem Anschluß 2 verbunden werden kann. Zwischen dem Gehäuse 1 und dem kugelförmigen Schaltorgan 5 sind im Bereich der Anschlüsse 2,3 und 4 ebene Dichtringe 13 angeordnet, welche von Federn 15 unter Zwischenschaltung von Druckringen 14 gegen die Oberfläche de Schaltorgans 5 gedrückt werden.

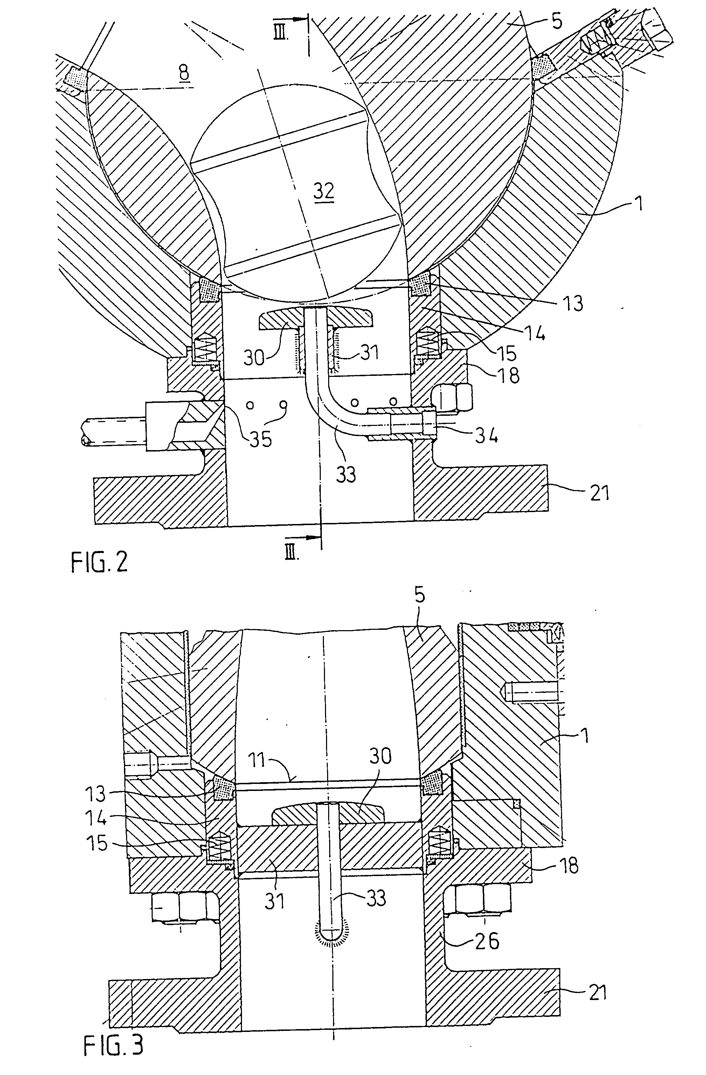

Wie insbesondere Fig. 2 zeigt, ist der zylindrische Druckring 14 axial verschiebbar im Gehäuse 1 geführt. Das Widerlager der Federn 15 wird von Anschlußringen 16, 17 und 18 gebildet, mit denen das Anschlußstück 26 sowie die Krümmer 19 und 20 am Gehäuse 1 angeschlossen sind.

Der bogenförmige Durchgang 8 hat einen Querschnitt, der dem Leitungsquerschnitt d entspricht. Es hat sich gezeigt, daß ein DUO-Molch dann in einem bogenförmigen Durchgang dicht an der Wandung anliegt, wenn der Krümmungsradius r größer ist als 1,5 mal, vorzugsweise 1,9 mal Durchmesser d der Rohrleitung bzw. des Durchganges 8.

Eine dichte Anlage des DUO-Molches kann dadurch verbessert werden, daß im Bereich des äußeren und inneren Bogenbereiches der Abstand von der Mittellinie 9 um 1% bis 8%, vorzugsweise 2% bis 5%, kleiner ist als in den seitlichen Bereichen des Bogens.

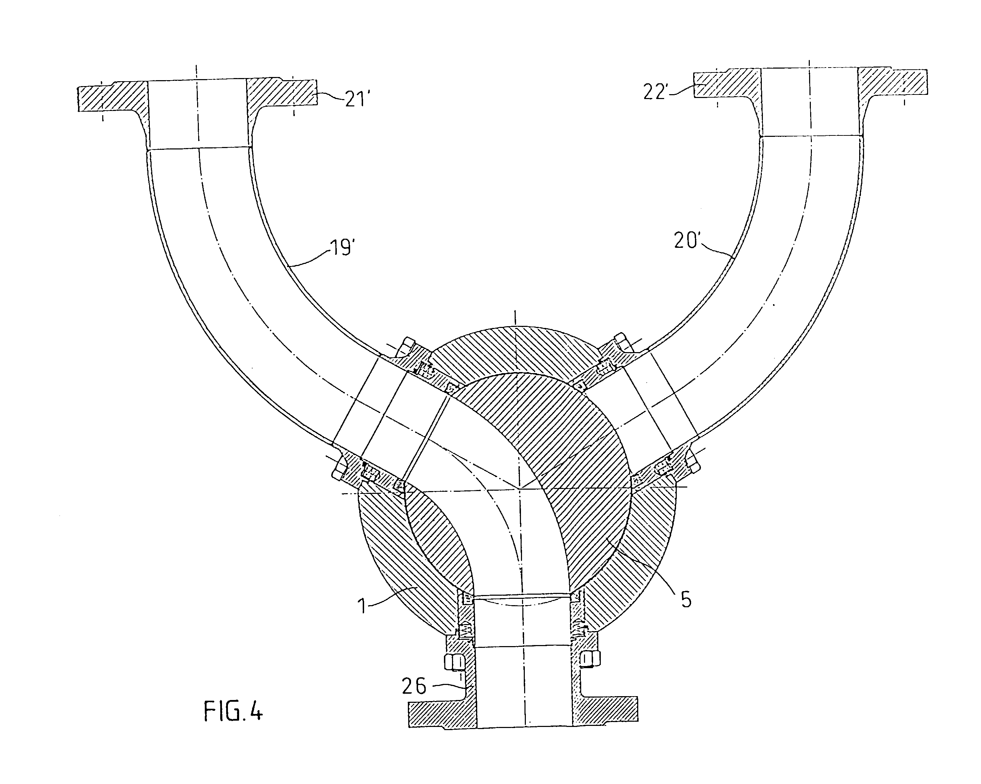

In Fig. 1 sind die Krümmer 19 und 20 so gebogen, daß ihre Anschlußflansche 22 und 23 rechtwinklig zum Anschlußflansch 21 des Anschlußstücks 26 stehen. Die Krümmer 19 und 20 sind über Verlängerungsstücke 24 und 25 so hochgezogen, daß die an die Anschlußflansche 22 und 23 anschließenden Rohrleitungen im Abstand oberhalb des Gehäuses 1 verlaufen, so daß die Schaltwelle des Schaltorgans 5 frei zugänglich ist. In Fig. 4 sind die Krümmer 19' und 20' so gebogen, daß die Anschlußflansche 21' und 22' parallel zum Anschlußflansch 21 stehen.

Wie insbesondre Fig. 2 zeigt, ist außerhalb des Durchganges 8 im Anschluß 2 ein Molchstopper 30 so angeordnet, daß er fast die Peripherie des Schaltorgans 5 berührt. Der Molchstopper 30 ist tellerartig ausgebildet und wird von einer Brücke 31 gehalten, die am Druckring 14 des Anschlusses 2 angeschweißt ist. Durch einfaches Auswechseln des Druckringes 14 kann die Armatur mit einem Molchstopper 30 ausgerüstet werden oder aber der Molchstopper 30 entfernt werden. Der Molchstopper hat eine gewölbte Oberfläche, die mit der gewölbten Oberfläche eines DUO-Molches 32 derart zusammenwirkt, daß der Aufschlag des Molches 32 gedämpft ist. Das Schaltorgan 5 kann zusammen mit dem im Durchgang 8 gehaltenen Molch 32 in eine andere Position geschaltet werden. Am Molchstopper 30 ist ein Molchmelder angeordnet, der ein Signal gibt, wenn sich ein Molch im Schaltorgan 5 befindet. Der Molchmelder kann mechanisch, hydraulisch, elektrisch oder magnetisch arbeiten. Eine mechanische Ausführung könnte mittels einer biegsamen Welle erreicht werden. Da DUO-Molche bereits mit einem Magneten versehen sind, erfolgt die Molchmeldung auch hier zweckmäßigerweise magnetisch, indem ein magnetisch leitender Leiter 33 von der Peripherie des Schaltorganes 5 nach außen geführt wird, so daß das vom Molch 32 ausgehende Magnetfeld über den Leiter 33 einen Magnetschalter 34 betätigt. Der aus Stahl bestehende Leiter 33 ist durch die Wand des beispielsweise aus Edelstahl bestehenden Anschlußstückes 26 hindurchgeführt, so daß am Ende des Leiters 33 ein Magnetschalter oder Reedschalter 34 angebracht werden kann. Im tellerförmigen Molchstopper 30 befindet sich eine Ausnehmung oder Bohrung, in die das dem Schaltorgan 5 zugewandte Ende des magnetischen Leiters 33 eingeführt ist.

Wie die Fig. 2 zeigt, können im Bereich des Molchstoppers 30 Düsen 35 angeordnet sein, durch die ein Spülmittel gegen den gestoppten Molch 32 gesprüht werden kann und so der Molch 32
von klebrigen oder sonst haftenden Bestandteilen befreit werden kann, bevor er mit einem anderen zu fördernden Gut in Verbindung kommt.

Es ist auch möglich, im Schaltorgan 5 einen magnetischen Leiter und einen Magnetschalter anzuordnen, dessen Leitungen durch die Schaltwelle hindurchgeführt sind und der auf einem im Molch 32 angeordneten Ringmagneten anspricht.

## Patentansprüche

1. Absperr- und Umlenkarmatur mit einem Gehäuse (1), das drei um 120° versetzte Anschlüsse (2,3,4) aufweist, und mit einem Schaltorgan (5), das kugelförmig ist und in mindestens zwei Schaltstellungen schwenkbar ist und einen bogenförmigen molchbaren Durchgang (8) aufweist, dessen Mittellinie (9) in einer rechtwinklig zur Drehachse des Schaltorgans (5) befindlichen Ebene verläuft, und dessen Mündungsebenen (10,11) im Winkel von 60° zueinander stehen und wobei an den Anschlüssen (2,3,4) Dichtringe (13) angeordnet sind, die von unter dem Druck von Federn (15) stehenden Druckringen (14) gegen die Kugelfläche des Schaltorgans (5) gepreßt werden, **dadurch gekennzeichnet**, daß der Krümmungsradius (r) des Durchganges (8) größer ist als 1,5 - vorzugsweise 1,9 mal Durchmesser (d) des Durchganges (8).

2. Absperr- und Umlenkarmatur nach Anspruch 1, dadurch gekennzeichnet, daß außerhalb des Durchganges (8) an der Peripherie des Schaltorgans (5) in einem Anschluß (2) ein Molchstopper (30) derart angeordnet ist, daß sich der gestoppte Molch (32) im Durchgang (8) des Schaltorgans (5) befindet.

3. Absperr- und Umlenkarmatur nach Anspruch 1 oder 2, dadurch gekennzeichnet, daß die rechtwinklig zur Mittellinie (9) verlaufenden Querschnitte des bogenförmigen Durchganges (8) etwas von einer Kreisfläche mit dem Durchmesser (d) abweichen, wobei der Abstand der äußersten und innersten Bogenmantellinie von der Mittellinie (9) um 1% bis 8% kleiner ist als der halbe lichte Durchmesser (d) und dieser Abstand von der äußersten und innersten Bogenmantellinie zu den beiden seitlichen Bogenmantellinien kontinuierlich auf den Wert des halben lichten Durchmessers (d) steigt.

4. Absperr- und Umlenkarmatur nach einem der Ansprüche 1 bis 3, dadurch gekennzeichnet, daß am Gehäuse (1) über Anschlußringe (18,16,17) ein mit einem Anschlußflansch (21) versehenes Anschlußstück (26) und zwei mit Anschlußflanschen (22, 23, 22', 23') versehene Krümmer (19,20; 19',20') befestigt sind, wobei die Krümmer (19,20, 19',20') so gebogen und angeordnet sind, daß ihre Anschlußflansche (22,23, 22',23') rechtwinklig oder parallel zum Anschlußflansch (21) stehen und die Anschlußringe (18,16,17) die Widerlager für die Federn (15) bilden.

5. Absperr- und Umlenkarmatur nach einem der Ansprüche 2 bis 4, dadurch gekennzeichnet, daß der Molchstopper (30) tellerartig ausgebildet und von einer am Druckring (14) des Anschlusses (2) befestigten Brücke (31) gehalten ist.

6. Absperr- und Umlenkarmatur nach Anspruch 5, dadurch gekennzeichnet, daß die Oberfläche des Molchstoppers (30) zum Durchgang (8) hin konvex gewölbt ist.

7. Absperr- und Umlenkarmatur nach einem der Ansprüche 2 bis 6, gekennzeichnet durch einen vom Molchstopper (30) ausgehenden und nach außen geführten mechanischen, hydraulischen, elektrischen oder magnetischen Molchmelder (33).

8. Absperr- und Umlenkarmatur nach Anspruch 7, gekennzeichnet durch einen von der Oberfläche des Molchstoppers (30) und der Peripherie des Schaltorgans (5) ausgehenden und nach außen geführten magnetischen Leiter (33), insbesondere aus Stahl, und einen von außen an den Leiter (33) anbringbaren Magnetschalter (Reedschalter) (34).

9. Absperr- und Umlenkarmatur nach Anspruch 8, dadurch gekennzeichnet, daß der magnetische Leiter (33) in einer Ausnehmung des tellerförmigen Molchstoppers (30) eingeführt ist.

10. Absperr- und Umlenkarmatur nach einem der Ansprüche 1 bis 9, gekennzeichnet durch im Anschlußstück (26) angeordnete und zum Molchstopper (30) und zum gestoppten Molch (32) hin gerichtete Spüldüsen (35).

11. Absperr- und Umlenkarmatur nach einem der Ansprüche 1 bis 10, dadurch gekennzeichnet, daß die Krümmer (19,20) so ausgebildet sind, daß sich ihre Anschlußflansche (22,23) im wesentlichen oberhalb des Gehäuses (1) befinden und der Schaltbereich sowie der Bereich des Molchmelders sich mit Abstand unterhalb der an die Anschlußflansche (22,23) anschließbaren Rohrleitungen befinden.

## Claims

1. Shutting and diverting armature, comprising a housing (1) having three ports (2,3,4) at 120° towards each other and further comprising a spherical switching element (5) which can be swivelled into at least two switching positions and presents an arched piggable passage (8) with a centre line (9) extending in a plane perpendicular to the axis of rotation of the switching element (5) and with outlet planes (10,11) being arranged at 60° towards each other, the ports (2,3,4) comprising joint rings (13) which are pressed against the spherical surface of the switching element (5) by means of pressure rings (14) under the pressure of springs (15), characterized in that the radius of curvature (r) of the passage (8) is longer than 1,5 times - preferably 1,9 times the diameter (d) of the passage (8).

2. Shutting and diverting armature according to claim 1, characterized in that a pig stopper (30) is arranged outside the passage (8) on the periphery of the switching element (5) inside a port (2) in such a manner that the stopped pig (32) is located within the passage (8) of the switching element (5).

3. Shutting and diverting armature according to claims 1 or 2, characterized in that the cross-sectional areas of the arched passage (8) which extend perpendicular to the centre line (9) deviate slightly from a circular area of the diameter (d), the distance of the outermost and the innermost arched surface lines from the centre line (9) being between 1 % and 8 % smaller than half the inside diameter (d) and this distance increasing continuously from the outermost and the innermost arched surface lines to the two lateral arched surface lines up to the value of half the inside diameter (d).

4. Shutting and diverting armature according to one of claims 1 to 3, characterized in that a connecting part (26) provided with a connecting flange (21) and two elbows (19,20; 19',20') provided with connecting flanges (22,23; 22',23') are fixed to the housing (1) by means of connecting rings (18,16,17), the elbows (19,20; 19',20') being arched and arranged in such a manner that their connecting flanges (22,23; 22',23') are perpendicular or parallel to the connecting flange (21) and that the connecting rings (18,16,17) constitute the supports for the springs (15).

5. Shutting and diverting armature according to one of claims 2 to 4, characterized in that the pig stopper (30) presents the shape of a plate and is held by a bridge (31) fixed to the pressure ring (14) of the port (2).

6. Shutting and diverting armature according to claim 5, characterized in that the surface of the pig stopper (30) is curved convexly towards the passage (8).

7. Shutting and diverting armature according to one of claims 2 to 6, characterized by a mechanical, hydraulic, electric or magnetic pig detector (33) issuing from the pig stopper (30) and led to the outside.

8. Shutting and diverting armature according to claim 7, characterized by a magnetic conductor (33), in particular of steel, issuing from the surface of the pig stopper (30) and the periphery of the switching element (5) and led to the outside, and by a solenoid switch (reed switch) (34) attachable to the conductor (33) from outside.

9. Shutting and diverting armature according to claim 8, characterized in that the magnetic conductor (33) is introduced into a recess of the plate-shaped pig stopper (30).

10. Shutting and diverting armature according to one of claims 1 to 9, characterized by flushing nozzles (35) arranged in the connecting part (26) and directed towards the pig stopper (30) and the stopped pig (32).

11. Shutting and diverting armature according to one of claims 1 to 10, characterized in that the elbows (19,20) are formed in such a manner that their connecting flanges (22,23) are located essentially above the housing (1) and the switching area as well as the area of the pig detector are located at a distance below the pipes connectable to the connecting flanges (22,23).

## Revendications

1. Garniture d'arrêt et de détournement comprenant un boîtier (1) présentant trois raccords (2,3,4) déplacés de 120° l'un de l'autre, et comprenant en outre un organe de commutation (5) sphérique, basculable en au moins deux positions de commutation et présentant un passage (8) arqué et raclable dont la ligne de milieu (9) s'étend dans un plan perpendiculaire à l'axe de rotation de l'organe de commutation (5) et dont les plans de débouchement (10,11) forment un angle de 60° entre eux, les raccords (2,3,4) comprenant des anneaux de joint (13) pressés contre la surface sphérique de l'organe de commutation (5) par moyen d'anneaux de pression (14) soumis à la pression de ressorts (15), caractérisée en ce que le rayon de courbure (r) du passage (8) est d'une longueur supérieure à 1,5 - de préférence 1,9 fois le diamètre (d) du passage (8).

2. Garniture d'arrêt et de détournement selon la revendication 1, caractérisée en ce qu'un arrêt d'écouvillons (30) est disposé à l'extérieur du passage (8) à la périphérie de l'organe de commutation (5) dans un raccord (2) de telle sorte que l'écouvillon arrêté (32) se trouve dans le passage (8) de l'organe de commutation (5).

3. Garniture d'arrêt et de détournement selon les revendications 1 ou 2, caractérisée en ce que les sections transversales du passage arqué (8) qui s'étendent perpendiculairement à la ligne de milieu (9) s'écartent légèrement d'une surface circulaire du diamètre (d), la distance entre la génératrice arquée la plus à l'extérieur et la génératrice arquée la plus à l'intérieur, d'une part, et la ligne de milieu (9), d'autre part, étant inférieure d'entre 1 % et 8 % à la moitié du diamètre intérieur (d) et cette distance augmentant continuement de la génératrice arquée la plus à l'extérieur et celle la plus à l'intérieur aux deux génératrices arquées latérales jusqu'à atteindre la valeur de la moitié du diamètre intérieur (d).

4. Garniture d'arrêt et de détournement selon une des revendications 1 à 3, caractérisée en ce qu'une pièce de raccordement (26) pourvue d'une bride de raccordement (21) et deux coudes (19,20; 19',20') pourvus de brides de raccordement (22,23; 22',23') sont rattachés au boîtier (1) au moyen d'anneaux de raccordement (18,16,17), les coudes (19,20; 19',20') étant arqués et disposés de telle sorte que leurs brides de raccordement (22,23; 22',23') sont perpendiculaires ou parallèles à la bride de raccordement (21) et les anneaux de raccordement (18,16,17) constituent les butées pour les ressorts (15).

5. Garniture d'arrêt et de détournement selon une des revendications 2 à 4, caractérisée en ce que l'arrêt d'écouvillons (30) se présente sous forme d'un plateau, étant soutenu par un pont (31) rattaché à l'anneau de pression (14) du raccord (2).

6. Garniture d'arrêt et de détournement selon la revendication 5, caractérisée en ce que la surface de l'arrêt d'écouvillons (30) est courbée convexement vers le passage (8).

7. Garniture d'arrêt et de détournement selon une des revendications 2 à 6, caractérisée par un détecteur d'écouvillons (33) mécanique, hydraulique, électrique ou magnétique partant de l'arrêt d'écouvillons (30) et conduit vers l'extérieur.

8. Garniture d'arrêt et de détournement selon la revendication 7, caractérisée par un conducteur magnétique (33), notamment en acier, partant de la surface de l'arrêt d'écouvillons (30) et de la périphérie de l'organe de commutation (5) et conduit vers l'extérieur, et par un commutateur magnétique (commutateur reed) (34) montable sur le conducteur (33) depuis l'extérieur.

9. Garniture d'arrêt et de détournement selon la revendication 8, caractérisée en ce que le conducteur magnétique (33) est introduit dans un évidement de l'arrêt d'écouvillons (30) en forme de plateau.

10. Garniture d'arrêt et de détournement selon une des revendications 1 à 9, caractérisée par des tuyères de rinçage (35) disposées dans la pièce de raccordement (26) et dirigées vers l'arrêt d'écouvillons (30) et vers l'écouvillon arrêté (32).

11. Garniture d'arrêt et de détournement selon une des revendications 1 à 10, caractérisée en ce que les coudes (19,20) présentent une forme telle que leurs brides de raccordement (22,23) se situent essentiellement au-dessus du boîtier (1) et que la zone de commutation ainsi que la zone du détecteur d'écouvillons se situent à une distance au-dessous des tuyaux raccordables aux brides de raccordement (22,23).
